# EUROPEAN PATENT APPLICATION

(11) **EP 3 650 113 A1**
(43) Date of publication of application: **13.05.2020**
(21) Application number: 18205767.9
(22) Date of filing: 12.11.2018
(51) Int. Cl.: B01F 3/12, B01F 7/00, B01F 15/00, B01F 13/00, B01F 15/02, B65D 81/32, A61C 5/68, A61C 19/00

(54) **DRIVEN MIXER**

(71) Applicant: Sulzer Mixpac AG, 9469 Haag (Rheintal) (CH)
(72) Inventor: The designation of the inventor has not yet been filed
(74) Representative: Manitz Finsterwald Patent- und Rechtsanwaltspartnerschaft mbB

(57) **Abstract**

The invention relates to a driven mixer 10 comprising a first chamber 12 configured to store a first component and a second chamber 14 configured to store a second component, the first chamber and the second chamber being connected to each other by a passage16, with the first and second chambers at least in an initial configuration of the driven mixer being separated by a barrier 18, the barrier being arranged to close off a flow path between the first and second chambers, the driven mixer further comprising a mixing member 20, the mixing member being drivable about an axis of rotation A, partly extending into the second chamber and having a coupling section 22 disposed outside the second chamber and configured to be drivingly coupled to a motor, wherein the first chamber has an initial storing capacity in the initial configuration of the driven mixer, wherein the driven mixer is configured to be brought into an activated configuration in which the first chamber has a reduced storing capacity smaller than the initial storing capacity, so that when the driven mixer is brought from the initial configuration into the activated configuration at least part of a content of the first chamber overcomes the barrier and is displaced into the second chamber, and wherein, at least in the initial configuration, the second chamber is arranged between the first chamber and the coupling section of the mixing member with respect to the axis of rotation.

## Description

The present invention relates to a driven mixer comprising a first chamber configured to store a first component and a second chamber configured to store a second component, the first chamber and the second chamber being connected to each other by a passage, with the first and second chambers at least in an initial configuration of the driven mixer being separated by a barrier, the driven mixer further comprising a mixing member being drivable about an axis of rotation, partly extending into the second chamber and having a coupling section disposed outside the second chamber and configured to be drivingly coupled to a motor.

A driven mixer of this kind is known for example from US 2018/0000560 A1, where a first component is stored in a first compartment and a second component is stored in a second compartment, with the first and second compartments being separated from one another by a flange. The driven mixer further has a mixing member which comprises a coupling section configured to couple the mixing member to a motor, an Archimedean screw, a mixing section and an intermediate section located between the coupling section and the mixing section thereby connecting the coupling section and the Archimedean screw with the mixing section. The mixing section is located in the second compartment, whereas the first compartment, the Archimedean screw and the coupling section of the mixing member are arranged on one, i.e. the same side of the second compartment.

In a closed position, the intermediate section of the mixing member presses against the flange, so that the first and second compartments are isolated from each other. In order to mix the first and second components, the mixing member and in particular the intermediate section of the mixing member is lifted, so that the intermediate section of the mixing member and the flange form a passage for the first component which is gradually transferred from the first compartment into the second compartment by means of the Archimedean screw.

However, as the mixing member is configured to be lifted in order to create a passage for transferring the first component from the first compartment into the second compartment, the driving member may be accidently lifted in the closed position, thus making the driven mixer prone to leakage. In particular, the first component and/or the second component may undesirably ingress from that compartment configured for its storage into the respective other compartment and permit a fluid transfer to take place. Furthermore, moisture and gasses like oxygen may more easily ingress into at least one of the chambers. These aspects may contribute to a decreased storage life of the materials stored in the respective compartments.

Moreover, if the mixing member of the driven mixer is not correctly placed onto the flange separating the first and second compartments, the two components will not be separated in a fluid tight manner, so that a fluid transfer can take place between the first and second compartments and also for this reason reduce the storage life of the materials stored in the respective compartments.

It is therefore an object of the invention to provide a driven mixer with which the handling thereof can be simplified, which is less prone to leaks and which also makes available an increased storage life of components stored in the respective compartments. It is a further object of the present invention to make available a driven mixer that can be manufactured and assembled in a facile manner.

This object is satisfied by a driven mixer according to claim 1.

The driven mixer according to the invention comprises a first chamber configured to store a first component and a second chamber configured to store a second component, the first chamber and the second chamber being connected to each other by a passage, with the first and second chambers at least in an initial configuration of the driven mixer being separated by a barrier, with the barrier being arranged to close off a flow path between the first and second chambers and in particular being a separate component, the driven mixer comprises further a mixing member, the mixing member being drivable about an axis of rotation, partly extending into the second chamber and having a coupling section disposed outside the second chamber and configured to be drivingly coupled to a motor, wherein the first chamber has an initial storing capacity in the initial configuration, wherein the driven mixer is configured to be brought into an activated configuration in which the first chamber has a reduced storing capacity smaller than the initial storing capacity, so that when the driven mixer is brought from the initial configuration into the activated configuration at least part of a content of the first chamber overcomes the barrier and is displaced into the second chamber, and wherein, at least in the initial configuration, the second chamber is arranged between the first chamber and the coupling section of the mixing member with respect to the axis of rotation.

The invention is based on the general idea, that the storage life of a driven mixer can be increased by arranging, at least in an initial configuration of the driven mixer, a second chamber configured to store a second component between a first chamber configured to store a first component and a coupling section of a mixing member.

In other words, in contrast to the driven mixer disclosed in US 2008/0000560 A1, in the initial configuration, the first chamber and the coupling section of the mixing member are arranged on opposite sides of the second chamber, so that no sophisticated duct for a shaft of the mixing member, extending at least through the first chamber is required.

Such an arrangement of the first chamber, second chamber and the coupling section of the mixing member allows for better storing of the first and second components, thereby increasing storage life. Furthermore, as no duct extends through the first chamber, it may be more easily sealed, thereby further increasing storage life. Preferably, the storage life is about three to four years.

The barrier which is arranged to close off the flow path between the first and second chambers also ensures that no component can accidentally communicate with the other component in the storage state further increasing the storage life of components stored in the driven mixer.

Further benefits and advantageous embodiments of the invention will become apparent from the dependent claims, from the description and from the accompanying drawings.

A reduced storing capacity of the first chamber in the activated configuration is to be understood such that the first chamber has a smaller volume in the activated configuration compared to the initial configuration.

In the initial configuration of the driven mixer, the first component may be stored in the first chamber separately from the second component stored in the second chamber.

In this connection it should be noted that the initial configuration also corresponds to a storage state of the driven mixer. In the storage state the components are stored separate from one another in the first and second storage chambers in such a way that the components can be stored for a desired and predefined lifetime.

In order to store the components for the desired and predefined lifetime, the barrier arranged in the flow path between the first and second chambers has to be configured such that it can prevent a fluid communication between the first and second storage chambers and also such that the barrier is made of a material that is impermeable to liquids and/or gases such as water and/or oxygen.

It is to be understood that the membrane selected for use with the driven mixer is also inert to the material stored in the respective chamber in order to ensure a sufficient storage life of the materials stored in the driven mixer. US 2008/0000560 A1 does not disclose a barrier in the form of a membrane that seals off a chamber.

The driven mixer may be used for dental applications. It is therefore advantageous, if the driven mixer further comprises a motor, with the motor being the motor of a dental handpiece to drive the mixing member of the driven mixer. In particular, the motor for driving the mixing member may be arranged at or in a dental handpiece.

In order to couple the mixing member to the motor, the mixing member may comprise a coupling end interacting with a counter part of the motor and being formed at one end defining a coupling section of a drive rod of the mixing member such that a torque can be transferred from the motor to the mixing member. It is to be understood that the coupling end and a mixing section configured to mix the first and second components in the second chamber are arranged at opposite end sections of the mixing member.

For a better handling of the driven mixer during discharging the mixed first and second components, the mixing section of the mixing member may be connected to the drive rod by means of a predetermined breaking linkage, in particular with the drive rod being configured to break away from the mixing section in an discharging configuration of the driven mixer in which the mixed first and second materials are discharged from the driven mixer. Alternatively, the mixing section may be integrally formed with the drive rod. According to a further design, the mixing section may be connected to the drive rod by means of a gear train.

The gear train may comprises two or more gears, such as a first gear and a second gear, in particular, wherein the first gear is arranged at the drive rod and engages with a second gear of the mixing section, preferably wherein the second gear is rotatably mounted around a passage that ends at a tip portion comprising a discharge orifice. The provision of a gear train ensures the transfer of torque from the coupling section to the mixing section. The provision of the gear train further ensures that one can adopt the torque and/or speed from the dental handpiece to an optimum torque and/or speed of the mixing member required for sufficient mixing of the first and second materials.

In this context, it should be mentioned that the torque and/or speed required for mixing the first and second materials depends on their properties like viscosity or rheology. The gear train can be configured to transfer the ideal torque for the respective mixture.

The adaption of the torque may be achieved by a speed reduction gear train or a speed increase gear train. Alteration of the output torque and/or output speed of the dental handpiece by means of the driven mixer may be in particular beneficial if the dental handpiece is incapable of adjusting the output torque and/or output speed by itself. However, the speed between the components of the gear train may also not be altered.

According to a preferred embodiment the first chamber may be generally shaped like a hollow cylinder, into which a piston may be moved so as to reduce the storing capacity of the first chamber in the activated configuration. Furthermore, in the initial position, the piston may bound the first chamber, in particular from one end side of the first chamber. Alternatively the piston may be arranged between the first chamber and the second chamber. Preferably, the piston is movable along the axis of rotation or the first chamber is movable along the axis of rotation relative to the piston. A piston is a comparatively simple component that can be used to compress and move the first component from the first chamber to the second chamber.

The piston may be a static piston comprising a piercing end, with the piercing end being configured to pierce a membrane of the barrier in order to permit a fluid communication between the first and second chambers, optionally with the static piston being configured to occupy at least a majority of, preferably all of, the first chamber in the activated configuration. In this way a driven mixer is made available in which a dedicated opening of a seal has to take place in order to transfer the driven mixer from the initial configuration to the activated configuration.

Furthermore, the driven mixer may comprise a body portion in which the second chamber is formed, wherein the piston is formed as an integral part of the body portion, or is movable within the body portion. Such a body portion is simple to manufacture and can provide a frame for the driven mixer.

The driven mixer may further comprise a plug which in the activated configuration bounds the second chamber and is configured to be moved into the second chamber so as to displace, in the discharge configuration, a content, i.e. the mixed first and second components, of the second chamber out of the driven mixer. It is to be understood that the plug is movable along the axis of rotation.

The piston may be configured to be moved into the first chamber in a first direction and the plug may be configured to be moved into the second chamber in a second direction, wherein the first direction and the second direction may be the same direction. Ideally, an angle between the first and second directions may be 0° if the first and second directions are the same direction. However, the angle between the first and second directions may deviate by up to 10°, in particular by up to 5°. Alternatively the first direction and the second direction may be opposite directions. Ideally, an angle between the first and second directions may be 180° if the first and second directions are opposite directions. However, this angle may also deviate by up to 10°, in particular by up to 5°.

The mixing member may comprise a mixing section comprising at least one mixing vane for mixing the first and second components, wherein the mixing vane is in particular concentrically arranged with the axis of rotation and more specifically extends in parallel to or at least substantially in parallel to the axis of rotation. The provision of such a mixing vane improves the handling of the driven mixer and facilitates a thorough through mixing of the various components to be mixed. In this context, it is to be mentioned that an extension of a mixing vane at least substantially in parallel to the axis of rotation means that the mixing vane may deviate by up to 3° from the axis of rotation.

The mixing section may comprise a disc shaped section that couples the mixing vane to the coupling section, in particular to the drive rod. The mixing section, in particular the disc shaped section thereof may form a part of the passage. Such components are simple to manufacture, permit a simple handling of the driven mixer and can be assembled comparatively quickly.

Furthermore, the mixing section may comprise multiple arms or spokes instead of a disc-shaped portion. One or more mixing vanes may be provided for each arm or spoke. A mixing member comprising multiple arms or spokes shows the advantage that, during the mixing of the first and second materials, material swirled on top of the mixing section will drop back through an interspace formed between adjacent arms or spokes into the second chamber. This allows for sufficient and thorough mixing of the first and second materials.

The first and second chambers can be coupled to one another by means of a snap-on connection, an interference fit type of connection, a press-fit type of connection, a plug and rotate type of connection, a bayonet type of connection, a threaded connection or combinations of the foregoing. Such types of connections are simple to produce and bring about and enable a more facile and reliable manufacture and assembly of the driven mixer.

The second chamber may have a first end at which it is connected to the first chamber by a passage and a second end which is opposite to the first end and at which the second chamber is bound by the mixing member and/or by a closure supporting the mixing member. Such components are simple to manufacture in a reliable manner.

According to one aspect of the invention, the passage between the first and second chambers may be sealed by the barrier. Furthermore, the barrier may be a membrane or film, and at least part of the first component of the first chamber is forced through the membrane or film, when the driven mixer is brought from the initial configuration into the activated configuration. Such a membrane may easily and economically seal the first chamber and or the second chamber, thereby enhancing storage life. In particular, the membrane or film may be tearable on bringing the driven mixer from the initial configuration into the activated configuration, thereby allowing the first component to discharge from the first chamber into the second chamber.

Furthermore, at least part of the first and second components mixed in the second chamber may be forced through the membrane or film, when the driven mixer is brought from the activated configuration into the discharge configuration.

The barrier may be an injection molded membrane or film. The injection molded membrane or film is typically configured to rupture if a pressure of the material stored in the first chamber exceeds a pre-defined threshold on displacing the driven mixer from the initial configuration into the activated configuration. In this way one can ensure that the barrier does not rupture in a storage state of the driven mixer.

The barrier may also be a film welded to the first chamber and/or to the second chamber. By way of example, the film may be welded to the respective chamber by laser welding, ultrasonic welding or any other suitable heat generating method.

The first chamber may be filled with a liquid, with the liquid preferably being selected from the group of members consisting of a dental fluid, a medical fluid, an ophthalmic fluid, a veterinary fluid and combinations of the foregoing. It is to be noted that the first component stored in the first chamber may also be a solid material, in particular a powder.

The second chamber may be filled with a powder, with the powder preferably being selected from the group of members consisting of a dental powder, a medical powder, an ophthalmic powder, a veterinary powder and combinations of the foregoing. It is to be understood that the second component may also be a fluid.

In this way two-component materials can be stored and made available in the driven mixer that can be used in a wide variety of fields of applications, such as for adhesives, cement materials, mold materials, bleaching agents or sealing materials.

According to another preferred embodiment, the driven mixer may be configured as a syringe comprising a tubular barrel portion, a tip portion being connected to the barrel portion from one side and a plunger portion inserted into the barrel portion from the other side. The barrel portion may comprise a first chamber and a second chamber formed therein, with the first and second chambers preferably being connected to each other by a passage, the passage being sealed by a first barrier. According to this embodiment, the tip portion may comprise a channel one end of which forms a discharge orifice of the driven mixer and the other end of which may be closed by a second barrier which together with the first barrier may bound the first chamber in the initial configuration. The tip portion additionally may be configured to be moved further into the barrel portion so as to force at least part of a content of the first chamber through or past the first barrier into the second chamber. Furthermore, the plunger portion may bound the second chamber in the initial configuration and may support the drivable mixing extending at least partly into the second chamber and being configured to be connected to a motor. The plunger portion further may be configured to be moved further into the barrel portion so as to force at least part of a content of the second chamber through or past the first barrier and second barriers out of the discharge orifice.

The second chamber may comprise a bottom part in which an annular recess is formed, in particular wherein a part of the mixing member has a shape adapted to the shape of the annular recess. This permits an improved mixing of the materials in the second chamber.

According to one aspect of the invention, the mixing member may also be used for discharging the mixed first and second material, in particular from the second chamber. In order to move at least a shaft of the mixing member from which at least one mixing vane extends into radial direction with regard to the axis of rotation, the at least one mixing vane of the mixing member is preferably made of a flexible material, such as an elastomeric plastic material. In this context, the flexible material of the mixing vane is a material which is more flexible compared to the material of the driving rod or the material of one of the chambers, in particular of the second chamber.

Alternatively, the at least one mixing vane may be configured to break away from the mixing member on bringing the driven mixer into a discharge configuration, in which the mixing member extends through the second chamber into the first chamber to discharge the mixed first and second components from the second chamber out of the driven mixer.

Preferably the parts of the driven mixer are made of a plastic material by injection molding. This facilitates a facile method of manufacture of the driven mixer. Due to the reliability in forming the parts the assembly thereof can also be simplified.

In this connection it should be noted that the barrier may be a foil of poly vinyl alcohol (PVOH), a film made of a thermoplastic or of a thermosetting polymer, in particular one of polyethylene terephthalate (PET), polyamide (PA), polyethylene (PE), polypropylene (PP), or polybutylene terephthalate (PBT). The film may be a multi-layer film made of a combination of different layers of different materials, with the different materials comprising Aluminium, poly ethylene terephthalate (PET), polyamide (PA), polyethylene (PE), polypropylene (PP), polybutylene terephthalate (PBT) and combinations of the foregoing.

In this connection it should likewise be noted that the body portion, like the piston, the first and second chambers, the closure or lid, the mixing member are formed from a plastic, e.g. a medical grade plastic, especially a thermoplastic or a thermosetting polymer, in particular one of polyethylene terephthalate (PET), polyamide (PA), polyethylene (PE), polypropylene (PP), polybutylene terephthalate (PBT) and combinations of the foregoing.

Furthermore, the mixing member may be made of a stable material adapted for sustaining the forces prevailing during the mixing of the first and second materials. By means of example, the mixing member may be made from a reinforced plastic, in particular from a fibre reinforced plastic, preferably from a glass fibre reinforced plastic. Moreover, the piston, the first and second chambers and/or the closure or lid may also be made from a reinforced plastic material. If at least part of the driven mixer is made from a reinforced plastic material, wear of the components of the driven mixer during the mixing of the first and second materials is reduced or completely supressed, at best. Less wear also means that less, preferably no, abrasion from the respective component may arrive at the mixture comprising the mixed first and second materials and consequently is not applied to a patient, for example.

It is to be understood that the choice of the plastic material will also depend on the first and second materials stored in the first and second chambers, respectively.

The invention will be explained in the following in detail by means of embodiments and with reference to the drawings, wherein:
- Fig. 1: shows a perspective cross-sectional view of a driven mixer according to a first design in an initial configuration in an empty state;
- Fig. 2: shows a cross-sectional view of the driven mixer of Fig. 1 in the filled state (contents not shown for reasons of clarity);
- Fig. 3: shows a perspective cross-sectional view of the driven mixer of Fig. 1 in an activated configuration;
- Fig. 4: shows a cross-sectional view of the driven mixer of Fig. 3;
- Fig. 5: shows a perspective cross-sectional view of the driven mixer of Fig. 1 in a discharge configuration;
- Fig. 6: shows a cross-sectional view of the driven mixer of Fig. 5;
- Fig. 7a: shows a detail of a mixing member of the driven mixer of Fig. 1;
- Fig. 7b: shows a top view of a mixing member;
- Fig. 8: shows the driven mixer according to the first design in the initial configuration connected to a dental handpiece;
- Fig. 9: shows the driven mixer of Fig. 8 in the activated configuration;
- Fig. 10: shows a side view of a driven mixer according to a second design in an initial configuration;
- Fig. 11: shows a cross-sectional view of the driven mixer of Fig. 10;
- Fig. 12: shows a side view of the driven mixer of Fig. 10 in an activated configuration;
- Fig. 13: shows a cross-sectional view of the driven mixer of Fig. 12;
- Fig. 14: shows a side view of the driven mixer of Fig. 10 in a discharge configuration, with a closure being removed;
- Fig. 15: shows a cross-sectional view of the driven mixer of Fig. 14;
- Fig. 15a: shows a cross-sectional view of a driven mixer to a third design in an initial configuration;
- Fig. 15b: shows a top view of a closure or lid of the driven mixer of Fig. 15a;
- Fig. 15c: shows a top view of a body portion of the driven mixer of Fig. 15b;
- Fig. 15d: shows a cross-sectional view of the body portion of Fig. 15c;
- Fig. 16: shows a perspective cross-sectional view of a driven mixer according to a fourth design in an initial configuration;
- Fig. 17: shows a cross-sectional view of the driven mixer of Fig. 16;
- Fig. 18: shows a perspective cross-sectional view of the driven mixer of Fig. 16 in an activated configuration;
- Fig. 19: shows a cross-sectional view of the driven mixer of Fig. 18
- Fig. 20: shows a perspective cross-sectional view of the driven mixer of Fig. 16 in a discharge configuration;
- Fig. 21: shows a cross-sectional view of the driven mixer of Fig. 20;
- Fig 22: shows a perspective cross-sectional view of a driven mixer according to a fifth design in an initial configuration;
- Fig. 23: shows a cross-sectional view of the driven mixer of Fig. 22;
- Fig. 24: shows a perspective cross-sectional view of the driven mixer of Fig. 22 in an activated configuration;
- Fig. 25: shows a cross-sectional view of the driven mixer of Fig. 24;
- Fig. 26: shows a perspective cross-sectional view of the driven mixer of Fig. 22 in a discharge configuration;
- Fig. 27: shows a cross-sectional view of the driven mixer of Fig. 26;
- Fig. 28: shows a cross-sectional view of a driven mixer according to a sixth design in an initial configuration;
- Fig. 29: shows a detail of the driven mixer of Fig. 28;
- Fig. 30: shows the driven mixer according to the sixth design in the initial configuration connected to a dental handpiece;
- Fig. 31: shows a perspective cross-sectional view of a driven mixer according to a seventh design in an initial configuration;
- Fig. 32: shows a perspective cross-sectional view of the driven mixer of Fig. 31 in an activated configuration; and
- Fig. 33: shows a perspective cross-sectional view of the driven mixer of Fig. 31 in a discharge configuration.

In the following the same reference numerals will be used for parts having the same or equivalent function. Any statements made having regard to the direction of a component are made relative to the position shown in the drawing and can naturally vary in the actual position of application.

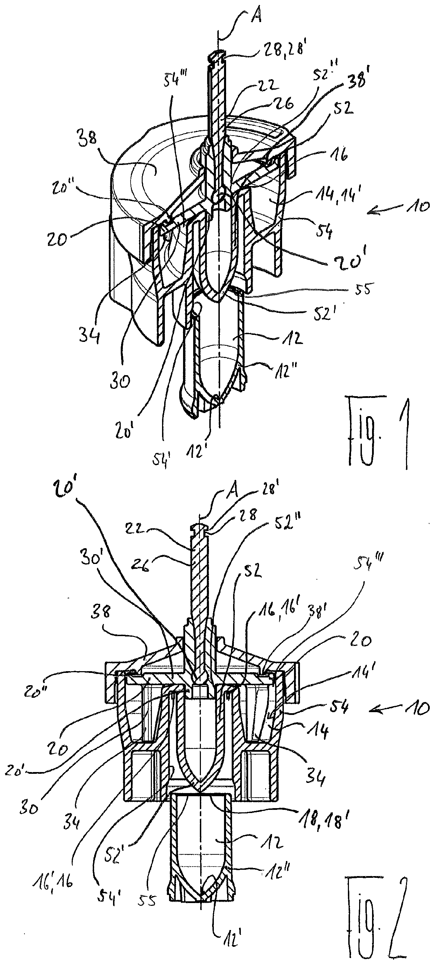

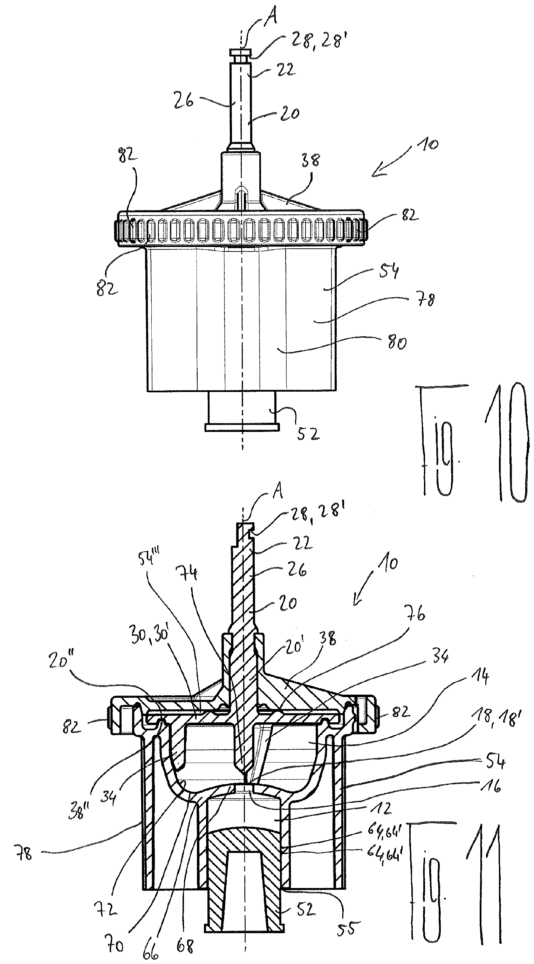

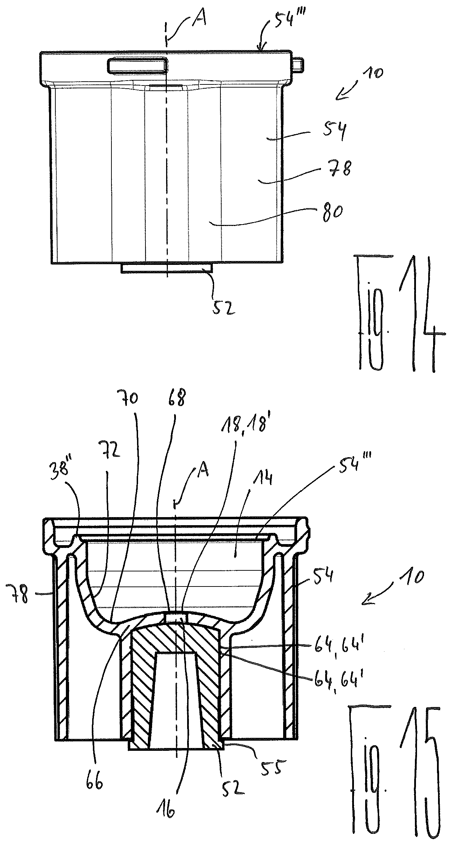

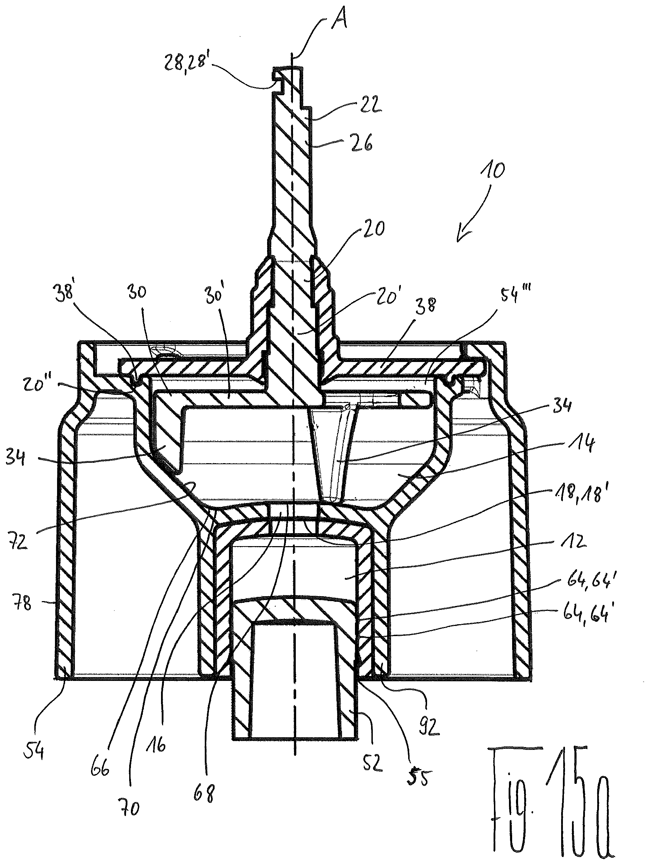

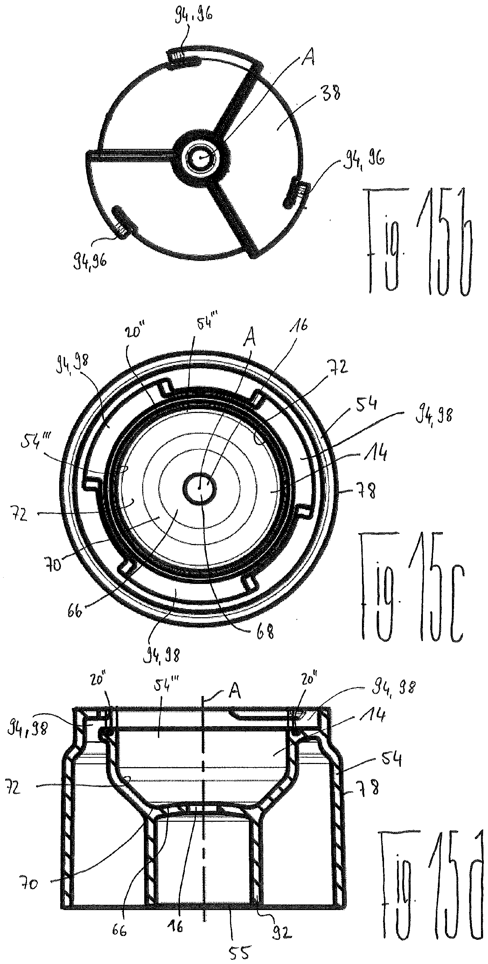

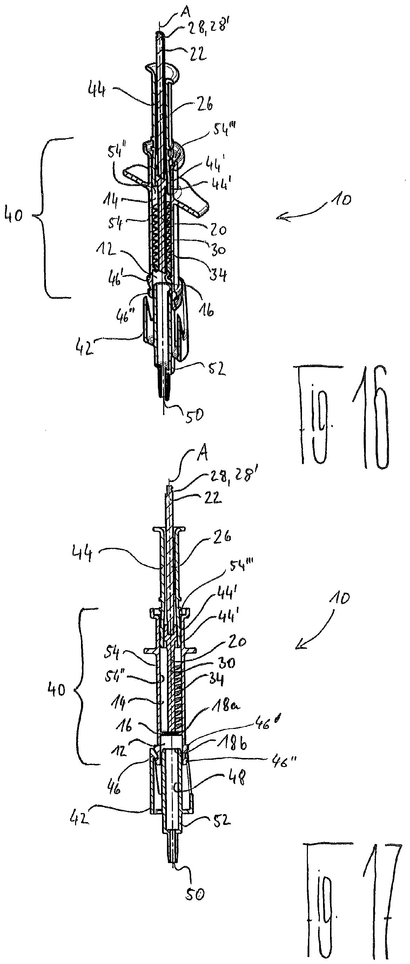

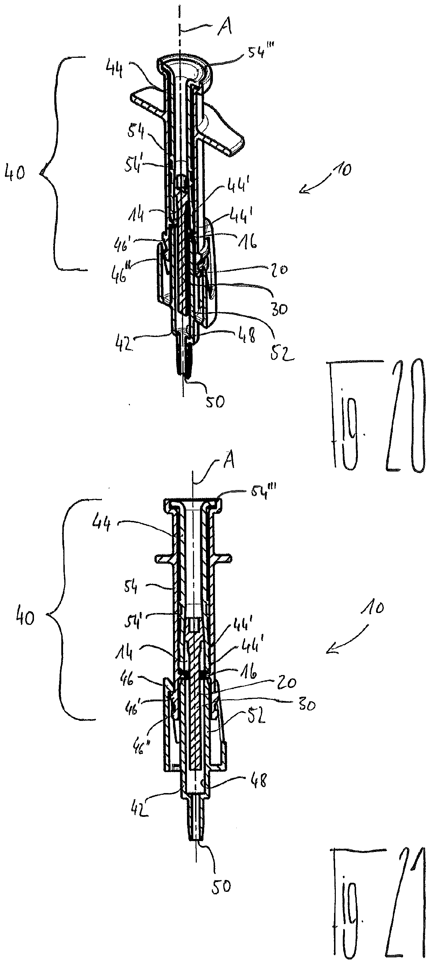

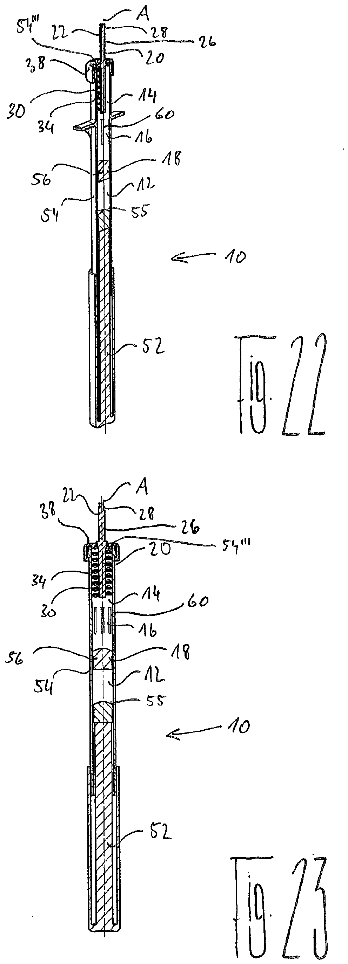

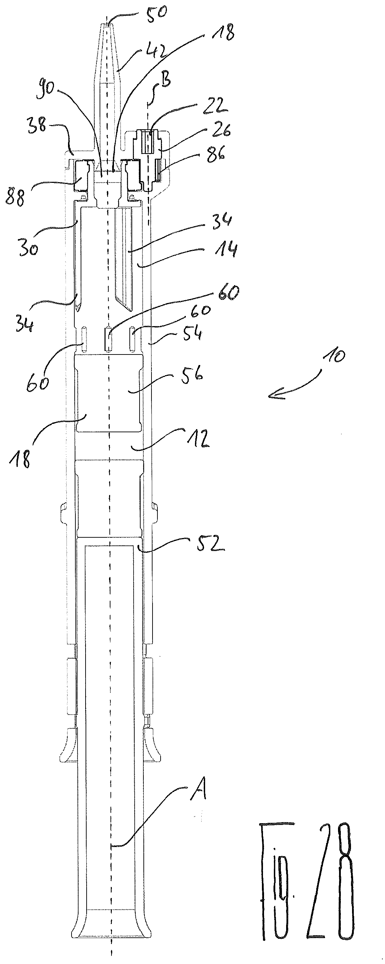

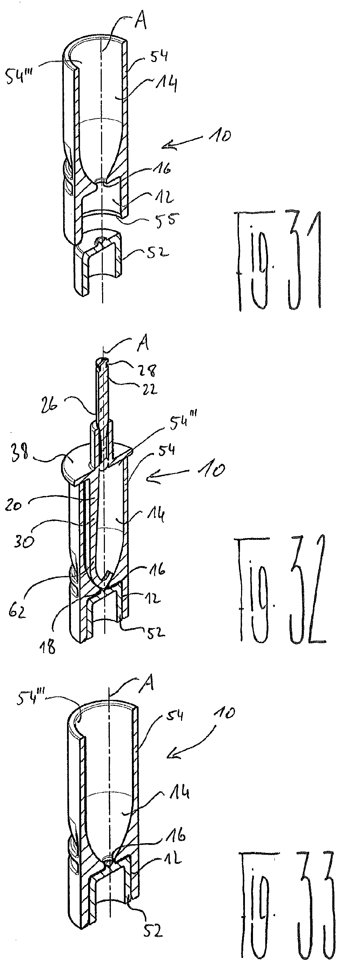

The drawings show various designs of a driven mixer 10. Figs. 1 to 9 are related to a driven mixer 10 according to a first design. A driven mixer 10 according to a second design is shown in Figs. 10 to 15 and a driven mixer 10 according to third design is shown in Figs. 15a to 15d. Furthermore, Figs. 16 to 21 show a driven mixer 10 according to a fourth design, whereas Figs. 22 to 27 show a driven mixer 10 according to a fifth design and Figs. 28 to 30 show a driven mixer 10 according to a sixth design. Finally, a driven mixer 10 according to a seventh design is shown in Figs. 31 to 33.

The driven mixer 10 according to all seven designs comprises a first chamber 12 configured to store a first component and a second chamber 14 configured to store a second component.

The first component may be a liquid, with the liquid preferably being selected from the group of members consisting of a dental liquid, a medical liquid, an ophthalmic liquid, a veterinary liquid and combinations of the foregoing. The second component may be a powder, with the powder preferably being selected from the group of members consisting of a dental powder, a medical powder, an ophthalmic powder, a veterinary powder and combinations of the foregoing.

The first and second chambers 12, 14 are connected by a passage 16 and are separated from one another by a barrier 18 which is arranged in a flow path between the first and second chambers 12, 14 and may seal off the passage 16 or one of the first and second chambers 12, 14.

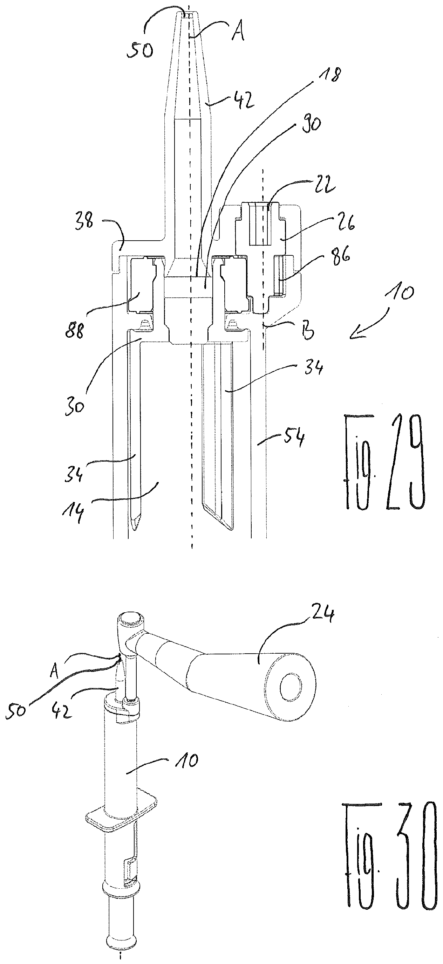

In other words the first and second chambers 12, 14 are separated by the barrier 18 at least in an initial configuration of the driven mixer 10, in which the first chamber 12 has an initial storing capacity. The initial configuration of the driven mixer 10 is shown in Figs. 1, 2 and 8 for the first design, in Figs. 10 and 11 for the second design, in Fig. 15a for the third design, in Figs. 16 and 17 for the fourth design, in Figs. 22 and 23 for the fifth design, in Figs. 28 and 30 for the sixth design and in Fig. 31 for the seventh design.

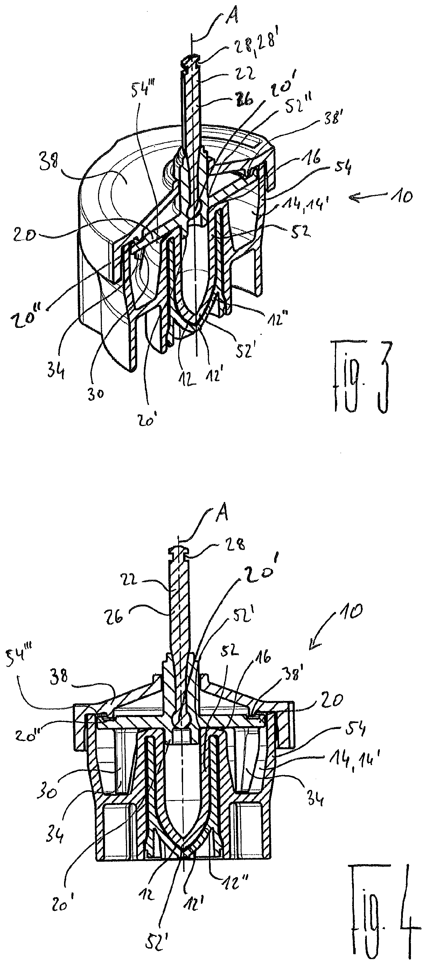

The driven mixer 10 is configured to be brought into an activated configuration which is shown but for the third and sixth designs for each of the designs in Figs. 3, 4, 9, 12, 13, 18, 19, 24, 25 and 32. In the activated configuration, the first chamber 12 has a reduced storing capacity smaller than the initial storing capacity, so that when the driven mixer 10 is brought from the initial configuration into the activated configuration at least part of a content, i.e. the first component of the first chamber 12, possibly on overcoming the barrier 18, is displaced into the second chamber 14.

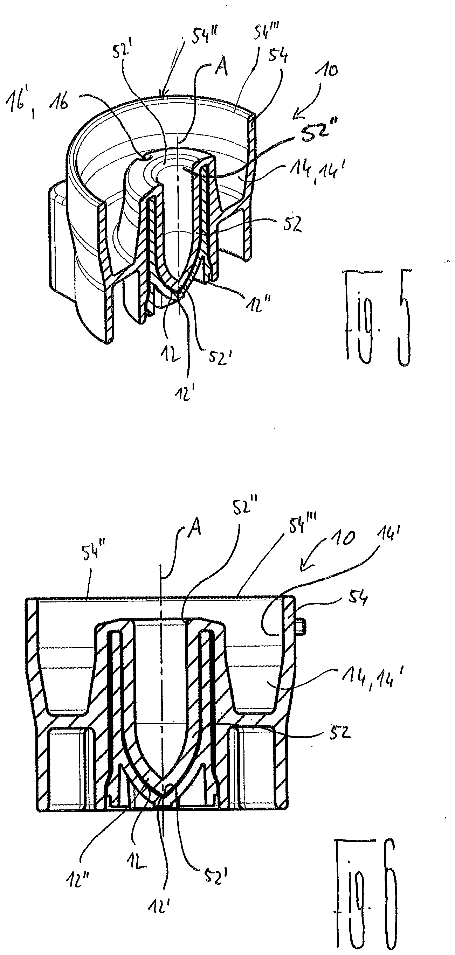

The barrier 18 of the driven mixer 10 according to the first, fourth and seventh designs is a membrane 18' or film (not shown in the drawings), wherein at least part of the initial content of the first chamber 12 can be passed through an opening of the membrane or film, when the driven mixer 10 is brought from the initial configuration into the activated configuration. The opening of the membrane or film 18' (see e.g. Fig. 6) may be brought about by piercing the membrane or film 18' with part of the driven mixer 10. As will be described in detail with regard to the second design shown in Figs. 10 to 15, the barrier 18 may also be a membrane or film 18' that ruptures as a predetermined pressure is reached which builds up as the volume of the first chamber 12 is reduced and the first material stored therein is compressed when the driven mixer 10 is brought from the initial configuration into its activated configuration. Furthermore, the barrier 18 may also be a film that is welded to the first chamber 12 and/or to the second chamber 14.

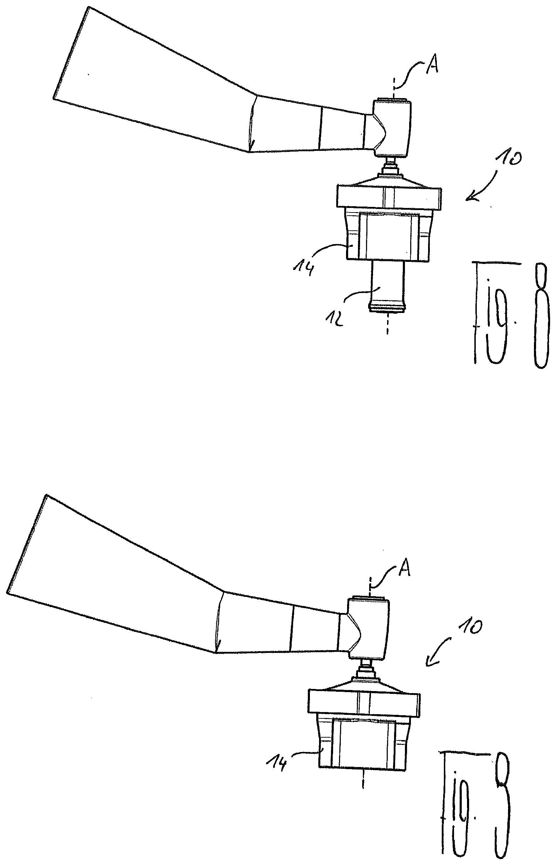

The driven mixer 10 of each of the respective designs further comprises a mixing member 20 which extends partly into the second chamber 14. The mixing member 20 is drivable about an axis of rotation A. For that purpose the mixing member 20 comprises a coupling section 22 disposed outside the second chamber 14 and is configured to be drivingly coupled to a motor arranged at or in a dental handpiece 24, as is exemplarily shown in Figs. 8 and 9 for the driven mixer 10 of the first design and in Fig. 30 for the sixth design, respectively.

More specifically, in order to couple the driven mixer 10 to the motor, the mixing member 20 comprises a drive rod 26, wherein the coupling section 22 is a coupling end 28 of the drive rod 26.

The coupling end 28 comprises a coupling recess 28' which extends at least in part circumferentially about the coupling end 28. The coupling recess 28' can be engaged by the motor and thereby transmit a rotational movement from the motor to the drive rod 26.

Furthermore, the mixing member 20 comprises, on a side opposite to the coupling section 22, a mixing section 30 which may be attached to the drive rod 26 (first and fourth designs) or which may be integral with the drive rod 26 (second, third, fifth and seventh designs). The mixing section 30 may also be connected to the drive rod 26 by a gear train 84, as will be described in detail with regard to the driven mixer 10 according to the sixth design.

The mixing section 30 of the mixing member 20 comprises at least one mixing vane 34 for mixing the first and second components.

As can be seen from Fig. 2, 11, 15a, 17, 23, 28 and 31, in the initial configuration, the second chamber 14 is arranged between the first chamber 12 and the coupling section 22 of the mixing member 20 with respect to its axis of rotation A. As can be also seen from Fig. 2, 11, 15a, 17, 23, 28 and 31, the first chamber 12 and the second chamber 14 are arranged coaxially with respect to the axis of rotation A.

In this connection it should be noted that the first chamber 12 is present in the form of a barrel 12" that comprises the membrane 18' at one end thereof and the piston receiving end 12' at an end oppositely disposed of the membrane 18'.

The end of the barrel 12" comprising the membrane 18' is inserted into a part 54' of a body portion 54 of the driven mixer 10 and held there in the initial configuration, for example via a friction fit.

The second chamber 14 has a first opening 16' via which it can be connected to the first chamber 12 in a fluid communicating manner by means of the passage 16 and a second opening 54'" which is arranged axially offset, optionally oppositely disposed of, from the first opening 16' and at which the second chamber 14 is bound by either the mixing member 20 (fourth design) or by a closure 38 supporting the mixing member 20 (first to third and fifth to seventh designs).

Turning to the first design of the driven mixer 10 as shown in Figs. 1 to 6, 8 and 9, one can see that the driven mixer 10 is closed in the initial and activated configurations (Fig. 1 to 4) by a closure 38 or lid which supports the drive rod 26 of the mixing member 20. The mixing member 20 has a mixing section 30 with several mixing vanes 34 extending into a direction orientated basically in parallel to the axis of rotation A.

The mixing vanes 34 project into a space 14' of the second chamber 14. Activation of the motor of the dental handpiece 24 results in rotation of the mixing member 20 and hence of the mixing vanes 34 in the space 14' relative to the second chamber 14, thereby mixing the first and second components in the second chamber 14.

The mixing member 20 is rotated about a center of rotation 20' that coincides with the axis of rotation A and a plane extending at least generally through the disc-shaped portion 30' of the mixing member 20 to which the vanes 34 are attached.

Bringing the driven mixer 10 into its activated configuration by moving the first chamber 12 along the axis of rotation A towards the second chamber 14, the storing capacity of the first chamber 12 is reduced compared to its storing capacity in the initial configuration of the driven mixer 10. As a result, a piercing end 52' of a static piston 52 pierces the membrane 18' (see Fig. 2) and is moved towards an end 12' of the first chamber 12.

By moving the piercing end 52' into the first chamber 12, the first component stored in the first chamber 12 is compressed and caused to move axially upwardly via the passage 16 into the second chamber 14, i.e. at least a part, preferably all, of the first component overcomes the barrier 18 formed by the membrane 18' and is discharged into the second chamber 14.

The second chamber 14 is a generally ring-shaped chamber 14 comprising the annular space 14' that is concentrically arranged to the first chamber 12, the static piston 52 and the axis of rotation A.

The static piston 52 comprises a recess 52" at its end disposed opposite of the piercing end 52'. The mixing member 20 is journaled within the recess 52" while the driven mixer 10 is both in the initial configuration and during mixing.

At its side disposed opposite of the static piston 52, the mixing member 20 comprises an annular recess 20" that can be engaged by a projection 38' of the closure 38.

The projection 38' cooperates with the annular recess 20" in order to ensure a correct movement of the vane 34 in the annular ring-shaped space 14' during the activated configuration of the driven mixer 10.

Fig. 5 shows a perspective sectional view of the components of the body portion 54 with the barrel 12" fully engaging the static piston 52'. The components of the body portion 54 comprise the second chamber 14, the static piston 52' and the passage 16 that connects the space 14' to a region about the static piston 52' in which the barrel 12" is received. The body portion 54 may be an injection molded part.

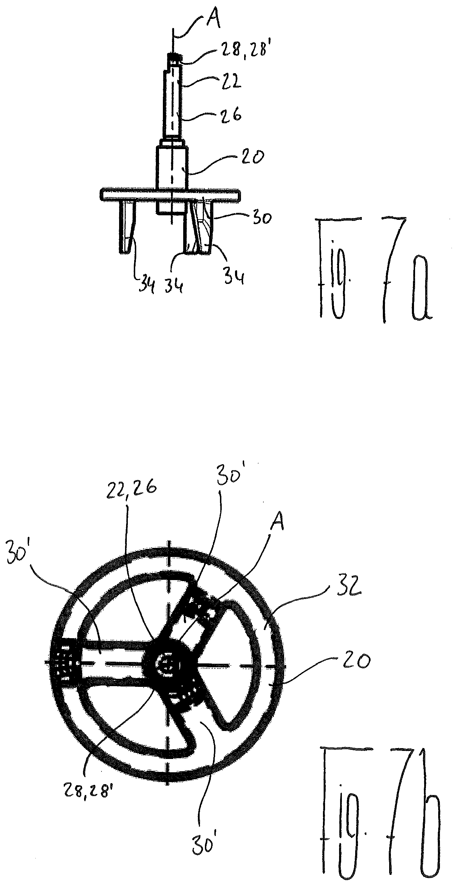

Fig. 7a depicts the components of the mixing member 20. The mixing member 20 can be integrally formed e.g. in an injection molding process in one piece from the same plastic material. The mixing member 20 comprises the coupling section 22 and the mixing section 30 that are fixedly connected to one another.

As can be seen from a top view of the mixing member 20 depicted in Fig. 7b, the mixing member 20 may also comprise multiple arms 30" or spokes 30" instead of a disc-shaped portion 30'. Radial outer ends of the arms 30" are connected to a ring portion 32, i.e. the ring portion 32 defines a radial outer circumference of the mixing member 20. One or more mixing vanes 34 may be provided for each arm 30".

A mixing member 20 comprising multiple arms 30" has the advantage that, during the mixing of the first and second materials, material swirled up and above the mixing section 30 will drop back through the interspace between adjacent arms 30" into the second chamber 14. This allows for sufficient and thorough mixing of the first and second materials.

The respective mixing vane 34 extends in an axial direction of the mixing member 20. The respective mixing vane 34 may be attached to at least one of the respective arm 30" and the ring portion 32.

The mixing member 20 shown in Fig. 7b comprises three arms 30". However, the mixing member 20 may also comprise more or less than three arms 30", with each arm 30" carrying one mixing vane 34.

In contrast to a mixing member 20 comprising a disc-shaped portion 30', a mixing member 20 comprising at least one arm 30" offers the advantage of being made of less material which makes the mixing member 20 comprising arms 30" more cost efficient.

The closure 38 is also a single part as is the barrel 12" that is formed in an injection molding process so that the driven mixer 10 of the first design comprises four independent parts that have to be assembled to form the driven mixer 10.

After the second and first components have sufficiently been mixed, the closure of the driven mixer 10 may be removed by taking off the closure 38 or lid. On removing the closure 38 or the lid, the mixing member 20 is automatically removed from the second chamber 14. The mixed first and second components are now ready to be applied following their removal from the second chamber 14, e.g. by means of a spatula.

Now turning to Figs. 10 to 15, a driven mixer 10 according to a second design is described. The driven mixer 10 according to the second design basically differs from the driven mixer 10 according to the first design, in that the first chamber 12 is immobile and the piston 52 is not static but rather is a movable piston 52. Furthermore, rather than storing the fluid in a separate barrel 12', the fluid is stored in a space formed between the moveable piston 52 and the second chamber 14.

Thus, the first and second chambers 12, 14 form an integral body portion 54 of the driven mixer 10.

Furthermore, the piston 52 is movable with respect to the first chamber 12, so that the driven mixer 10 is brought from the initial configuration into its activated configuration by moving the piston 52 into the first chamber 12, in that it can reduce a size of the first chamber 12.

The piston 52 is kept in the first chamber 12, for example via a friction fit. For this purpose, the piston 52 comprises stopping means 64 which enhance the friction fit. In the present embodiment, the stopping means 64 are formed as projections projecting radially away with regard to the axis of rotation A from an outer wall of the piston 52 facing towards an inner wall of the first chamber 12. Alternatively or additionally, the inner wall of the first chamber 12 facing towards the outer wall of the piston 52 may comprise stopping means.

The stopping means 64 further act as sealing means, in particular if they are formed as a sealing lip 64' as is presently the case. The sealing means avoid a leak of the material stored in the first chamber 12 from the first chamber 12.

Movement of the piston 52 into the first chamber 12 leads to a compression of the first material stored within the first chamber 12. As a result of the compression of the first material, pressure increases inside the first chamber 12 until a predetermined pressure is reached. Further compression of the first material or increase of the pressure inside the first chamber 12, respectively, results in a rupture of the membrane 18' or film acting as a barrier 18 between the first and second chambers 12, 14. The membrane 18' or film is namely designed to rupture if a pressure above a pre-defined threshold is exerted on the materials stored in the first chamber 12.

Following the rupturing of the membrane 18' or film acting as the barrier 18, the resultant reduction in pressure causes the material initially stored in the first chamber 12 to arrive in the second chamber 14 where it is then mixed with the material initially stored in the second chamber 14.

The barrier 18 of the driven mixer 10 according to the second design is a membrane 18' or film which is formed from an injection molding process, so that the membrane 18' or film is integrally formed with the body portion 54 of the driven mixer 10. In other words, the membrane 18' or film is formed between and integrally with the first and second chambers 12, 14. In particular, the membrane 18' or film forms a part of a bottom part 66 of the second chamber 14, wherein an opening of the ruptured membrane 18' or film is closed by a piston head of the piston 52 after same has been moved from the initial configuration into the activated configuration of the driven mixer 10.

Furthermore, in contrast to the second chamber 14 of the driven mixer 10 according to the first design, the second chamber 14 of the driven mixer 10 according to the second design does not define a ring-shaped chamber 14. Instead, the second chamber 14 of the driven mixer 10 according to the second embodiment, is formed bowl-like with a center part 68 the bottom part 66 of the second chamber 14, which also comprises the passage 16, being convexly curved towards the inside of the second chamber 14. Moreover, the bottom part 66 of the second chamber 14 further comprises an annular recess 70 formed between the convexly curved center part 68 and a wall 72 surrounding the second chamber 14. In other words, the second chamber 14 has a w-like cross-sectional shape as can be seen best from Figs. 11, 13 and 15. Such kind of bottom shape of the second chamber 14 allows for a better and easier removal of the mixed first and second materials from the second chamber 14.

The driven mixer 10 according to the second design further differs from the driven mixer 10 according to the first design in that the mixing member 20 comprising the mixing section 30 is integrally formed with the drive rod 26. Besides, the mixing member 20 further comprises a deflecting means 74 extending from a disc shaped section 30' of the mixing section 30 into the second chamber 14 in axial direction with regard to the axis of rotation A.

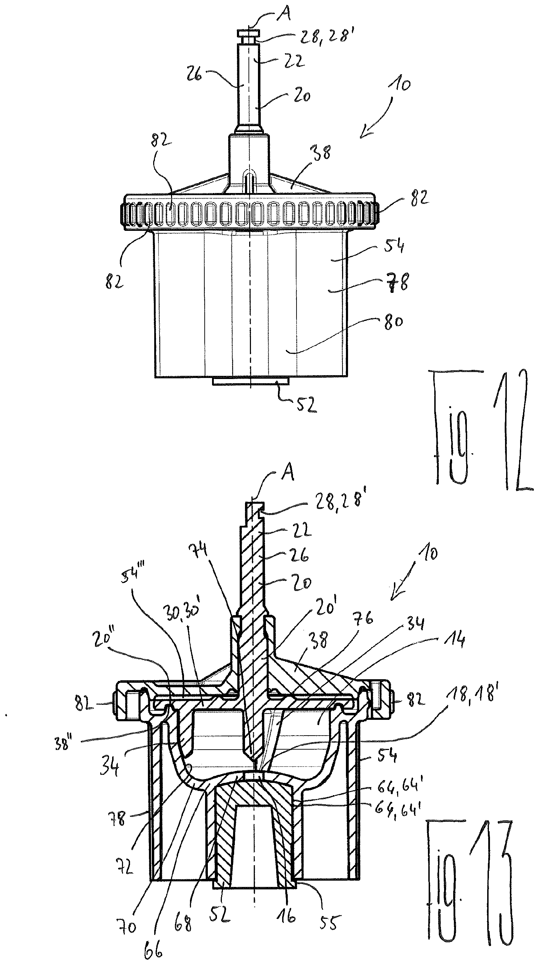

As can be seen from Figs. 11 and 13, the deflecting means 74 is coaxially aligned with the drive rod 26. The deflecting means 74 allows for a better distribution of the first material in the second chamber 14, in particular towards the annular recess 70 of the second chamber 14, after the first material has passed the barrier 18.

In particular, such distribution of the first material towards the annular recess 70 is of great relevance as in this area mixing vanes 34 extend from the disc shaped portion 30' of the mixing section 30 into the second chamber 14, thereby enhancing mixing properties of the driven mixer 10. Furthermore, thorough mixing of the first and second materials is further enhanced by the mixing vanes 34 contacting the wall 72 of the second chamber 14, as can be seen from Figs. 11 and 13.

It can be particularly beneficial if an end of the mixing vanes 34 that projects into the annular recess 70 has a shape that is complementary to a shape of the annular recess 70 in order to achieve improved mixing results.

On the other side of the disc shaped portion 30' of the mixing section 30 opposite to the side comprising the mixing vanes 34, the disc shaped portion 30' of the mixing section 30 comprises an annular elevation 76 which coaxially surrounds the drive rod 26 and acts together with the closure 38 or lid as bearing for the mixing member 20.

The driven mixer 10 according to the second design further comprises an outer wall 78, which basically surrounds the first and second chambers 12, 14. Furthermore, for a better handling of the driven mixer 10, the outer wall 78 comprises recesses 80 which allow for a better grip of the driven mixer 10. The driven mixer 10 according to the second design comprises four recesses 80 which are equally spaced around the circumference of the outer wall 78. It is to be understood, that the number of recesses 80 may be less than four or more than four. For example, the outer wall 78 may comprise only two or three recesses 80 or five, six or more recesses 80.

In order to be able to easily remove the closure 38 or lid after mixing the first and second materials, the closure 38 or lid comprises a plurality of gripping means 82 on its outer circumference, in the present example the gripping means 82 project from the surface of the closure 38 or lid.

Fig. 15a shows a driven mixer 10 according to a third design in an initial configuration and Figs. 15b to 15d show further details of the driven mixer 10 of Fig. 15a. The driven mixer 10 according to the third design basically corresponds to the driven mixer 10 according to the second design. However, the first chamber 12 and the second chamber 14 are separate parts, which allows for an individual filling of each of the first and second chambers 12, 14. Furthermore, the first and second chambers 12, 14 may be filled at separate places and subsequently assembled to form the driven mixer 10.

Assembly of the driven mixer 10 is carried out by inserting the first chamber 12 into a pocket portion 92 the body portion 54 comprising the second chamber 14. As can be seen best from Fig. 15a, the pocket portion 92 is arranged opposite to the second opening 54"' of the second chamber 14.

For fluid communication between the first and second chambers 12, 14, each of the first and second chambers 12, 14 comprises a passage 16. Each of the passages 16 may be closed-off by a barrier 18 which facilitates separately filling the first and second chambers 12, 14. Each barrier 18 may be a film that is welded to the respective chamber 12, 14, for example by means of laser or ultrasonic welding. It is to be understood that at least one of the barrier 18 also may be an injection molded membrane 18' or any other type of membrane 18' or film that is fixed to one of the first or second chambers 12, 14.

In this connection it should be noted that the barrier 18 may be a foil of poly vinyl alcohol (PVOH), a film made of a thermoplastic or of a thermosetting polymer, in particular one of polyethylene terephthalate (PET), polyamide (PA), polyethylene (PE), polypropylene (PP), or polybutylene terephthalate (PBT).

In this connection it should likewise be noted that the body portion 54, like the piston 52, the first chamber 12, the closure 38 or lid, the mixing member 20 are formed from a plastic, especially a thermoplastic or a thermosetting polymer, in particular one of polyethylene terephthalate (PET), polyamide (PA), polyethylene (PE), polypropylene (PP), or polybutylene terephthalate (PBT).

The material of the body portion 54 may be selected different from that of the first chamber 12 in dependence on the material stored in the respective first and second chambers 12, 14. The respective material of the body portion 54 and of the first chamber 12 being selected to bring about the longest possible storage life for the material stored within the respective chamber 12, 14.

The closure 38 or lid of the driven mixer 10 according to the third design is affixed to the body portion 54 by means of a bayonet joint 94. The bayonet joint 94 comprises hook shaped parts 96 formed on a radial outer section of the closure 38 or lid, which interact with corresponding openings 98 formed at the body portion 54 so that rotation of the closure 38 or lid about the axis of rotation A in one direction closes the driven mixer 10 and in particular the second chamber 14 and in the opposite direction opens the driven mixer 10 and in particular the second chamber 14.

The exemplary bayonet joint 94 comprises three hook shaped parts 96 and three corresponding openings 98. It is to be understood, that the bayonet joint 94 also may comprise more or less than three hook shaped parts 96 and corresponding openings 98, respectively.

The driven mixer 10 according to the first to third designs design comprises the following typical dimensions. In the initial configuration, the overall length of the driven mixer 10 in direction of the axis of rotation A may range from 20 to 60 mm, preferably from 30 to 50 mm.

In the activated configuration, the overall length of the driven mixer 10 in direction of the axis of rotation A may range from 20 to 55 mm, preferably from 30 to 45 mm.

After removal of the closure 38 or lid, the body portion 54 of the driven mixer 10 may have a length in the direction of the axis of rotation A ranging from 15 to 30 mm, preferably from 18 to 25 mm.

For good handling properties, in particular for good single hand operation, an outer diameter of the driven mixer 10 may range from 15 to 50 mm, preferably from 25 to 35 mm.

In order to provide an easy access to mixed first and second materials in the second chamber 14, a diameter of the second opening 54"' of the second chamber 14 may range from 10 to 50 mm, preferably from 15 to 30 mm.

Furthermore, a driven mixer 10 comprising a second opening 54'" of the second chamber 14 dimensioned in this way allows for an easy filling of the second chamber 14 with the second material. In particular, the diameter of second opening 54'" of the second chamber 14 is adapted to the size of a nozzle of a filling machine used for filling the second material into the second chamber 14.

In a similar manner, an opening 55 of the first chamber 12 (see for example Figs. 2, 11, 15a, 15d or 31) may be adapted to the size of a nozzle of a filling machine used to fill the first material into the first chamber 12. In particular, the diameter of the opening 55 of the first chamber 12 may range from 5 to 20 mm, preferably from 8 to 15 mm.

Typical storage volumes of the first and second chambers 12, 14 range from 0.05 to 10 ml, preferably from 0.1 to 5 ml, in particular 0.5 to 2 ml, for the first chamber 12 and from 0.05 to 10 ml, preferably from 0.1 to 5 ml, in particular 0.5 to 2 ml, for the second chamber 14.

In order to allow for sufficient transfer of the first material from the first chamber 12 into the second chamber 14, a diameter of the passage 16 between the first and second chamber 12, 14 may range from 1 to 10 mm, preferably from 2 to 5 mm.

The drive rod 26 may have an outer diameter of 2.35 mm and the coupling end 28 of the drive rod 26 is shaped according to DIN ISO 1797 in order to be configured to be connected to common dental handpieces 24.

In the following the driven mixer 10 according to the fourth design is described with respect to Figs. 16 to 21. The driven mixer 10 according to the fourth design is configured as a syringe comprising a tubular barrel portion 40, a tip portion 42 connected to the barrel portion 40 from one side and a plunger portion 44 inserted into the barrel portion 40 from the other side.

The first and second chambers 12, 14 of the driven mixer 10 according to the fourth design are arranged within the barrel portion 40.

The barrel portion 40 and the tip portion 42 are connected to each other by snap-on connection means 46. The snap-on connection means 46 comprise a nose 46' projecting into a recess 46" that circumferentially extends about a front end 14" of the second chamber 14.

In order to guide the first chamber 12 towards the second chamber 14, a pre-defined force has to be applied causing the nose 46' of the snap-on connection means 46 to overcome the recess 46". Thereafter the double walled structure of the first chamber 12 is guided relative to the second chamber 14.

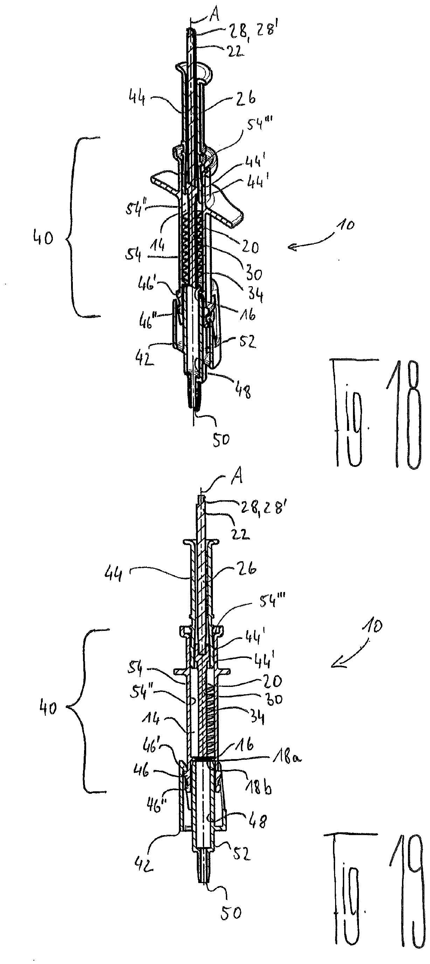

Furthermore, the first and second chambers 12, 14 are connected to each other by a passage 16 which is sealed by a first barrier 18a in form of a film (see Fig. 19). The first and second chambers 12, 14 also open to axially opposed ends of the barrel portion 40.

The tip portion 42 comprises a channel 48 one end of which forms a discharge orifice 50 of the driven mixer 10. The other end of the channel 48 is closed by a second barrier 18b in form of a film (see Fig. 19), inserted into the barrel portion 40 so as to bound the first chamber 12 together with the first barrier 18a. Furthermore, the tip portion 42 is configured to be moved further into the barrel portion 40 so as to force at least part of a content of the first chamber 12 through or past the first barrier 18a, particularly if this has been pierced on the movement of the first chamber 12 towards the second chamber 14 into the second chamber 14.

The tip portion of Figs. 16 to 21 comprises a double walled structure, with the inner wall of the double walled structure forms the channel 48 through which the mixed first and second components may pass to be extruded from the driven mixer 10 via the discharge orifice 50. The opening of the channel 48 opposing the discharge orifice 50 is sealed by the film 18b. The outwardly lying second wall forms part of the snap-on connection and also a guide structure by means of which the first chamber 12 can be guided towards the second chamber 14 on piercing the film 18a.

The plunger portion 44 is inserted into the tubular barrel portion 40 so as to bound the second chamber 14. The plunger portion 44 also rotationally supports the drivable mixing member 20 while providing a seal between the plunger portion 44 and an inner surface 54" of the body portion 54 in order to prevent a leak out of the driven mixer 10 via the coupling section 22.

In order to provide the seal sealing members e.g. in the form of sealing lips 44' are provided between the body portion 54 and the plunger portion 44. The sealing members are formed at the plunger portion 44 in the shown design.

Naturally speaking the sealing members could also be provided at the inner surface 54" of the body portion 54.

Furthermore, the plunger portion 44 is configured to be moved further into the tubular barrel portion 40 so as to force, in particular after mixing, at least part of a content, i.e. the mixed first and second components then present in the second chamber 14 through or past the first barrier 18a the second barrier 18b and out of the discharge orifice 50 of the tip portion 42.

Thus, on activating the driven mixer 10 of Fig. 16, the component stored in the first chamber 12 is moved into the second chamber 14, where it is mixed with the component stored in the second chamber 14 due to the movement of the motor.

After mixing the first and second components the drive rod 26 is configured to break away from the mixing member 20 and the plunger portion 44 can be pushed axially towards and into the second chamber 14 thereby discharging the mixed first and second components through the discharge orifice 50 of the tip portion 42 in the manner in which components are dispensed on use of a common syringe.

On moving the plunger portion 44 the mixing member 20 is moved together with the plunger portion 44, wherein the mixing vanes 34 of the mixing member 20 are made from an elastic material, so that the plunger portion 44 may be easily pushed into the channel 48 of the tip portion 42 to discharge the mixed first and second materials out of the discharge orifice 52.

Alternatively or additionally some of the mixing vanes 34 of the mixing member 20 could also be configured to break away from the mixing member 20 and then remain in the second chamber 14.

It is to be noted that the moving direction of the plunger portion 44 from the activated configuration into the discharge configuration of the driven mixer 10 is opposite to the moving direction of the first chamber 12 from the initial configuration into the activated configuration of the driven mixer 10.

Thus, the driven mixer 10 of Figs. 16 to 21 can adopt three positions, the storage position, i.e. the initial configuration, the activated configuration, i.e. the configuration in which the components are mixed, and the dispensing position, i.e. a position in which the components are dispensed from the driven mixer 10. On shifting the driven mixer 10 from the initial configuration to the activated configuration, a length of the driven mixer 10 is reduced. Moreover, on shifting the driven mixer 10 from the activated configuration into the dispensing position a length of the driven mixer 10 is further reduced.

Now turning to Fig. 22 to 27 a driven mixer 10 according to a fifth design is described.

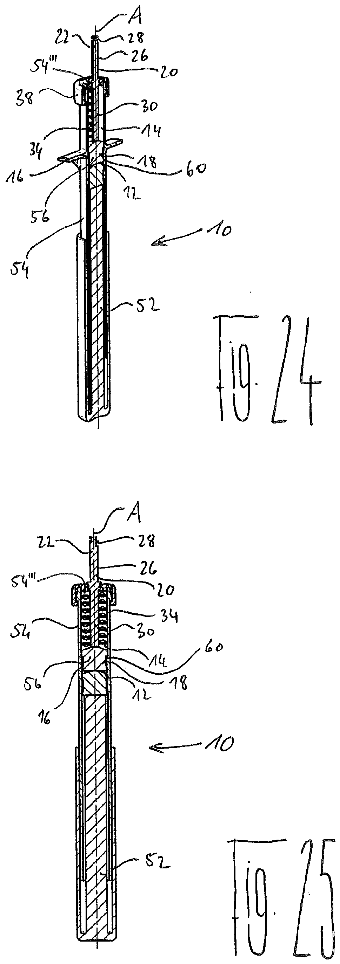

The driven mixer 10 according to the fifth design comprises a piston 52 which in the initial configuration bounds the first chamber 12 (Fig. 22 and 23) and is configured to be moved into the first chamber 12 so as to reduce its storing capacity of the first chamber 12 in the activated configuration (Fig. 24 and 25). As can be seen best by a comparison of Figs. 23 and 25, the piston 52 is movable along the axis of rotation A of the mixing member 20 or driving rod 26.

The driven mixer 10 further comprises a body portion 54 in which the second chamber 14 is formed. Furthermore, the piston 52 is formed as an integral part of the body portion 54.

As can be seen from Fig. 23, the driven mixer 10 also comprises a plug 56 which is arranged in the body portion 54 with regard to the axis of rotation A axially between the mixing member 20 and the piston 52. The plug 56 bounds the second chamber 14 in the activated configuration on one side. The plug 56 is furthermore configured to be moved along the axis of rotation A into the second chamber 14 so as to displace a content of the second chamber 14 out of the driven mixer 10, in particular on movement of the piston 52. In the initial configuration and in the activated configuration of the driven mixer 10, the second chamber 14 is bound on an opposite side to the side bound by the plug 56 by the mixing member 20.

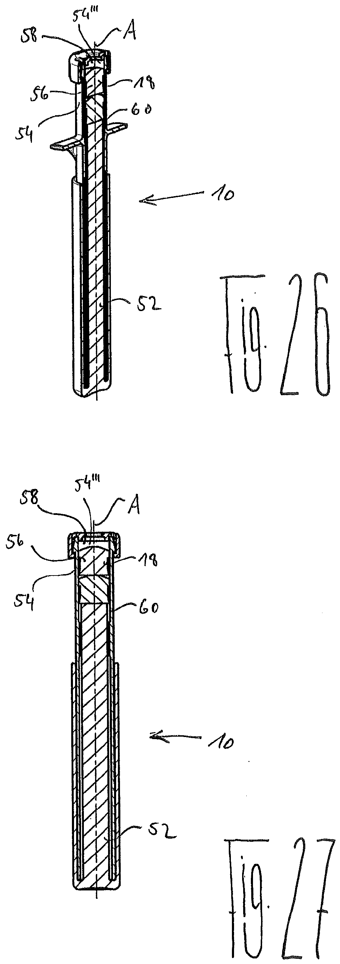

By comparison of Figs. 23, 25 and 27, it becomes apparent that the piston 52 is configured to be moved into the first chamber 12 in a first direction and the plug 56 is configured to be moved into the second chamber 14 in a second direction, wherein the first and second directions are the same, i.e. the first and second directions pointing towards an outlet 58 of the driven mixer 10 (Fig. 26 and 27). Note, that the outlet 58 is the same opening through which the mixing member 20 extends through in the initial and activated configurations.

In the initial configuration of the driven mixer 10, the plug 56 acts as the barrier 18 and is arranged in the passage 16 that connects the first chamber 12 and the second chamber 14 to each other. As the plug 56 is moved by the piston 52 from the initial configuration into the activated configuration, the plug 56 is moved from a sealing position shown in Figs. 22 and 23 to a pass-through position shown in Figs. 24 and 25.

In the sealing position the plug 56 blocks the passage 16 by tight contact to an inner wall of the passage 16 over a full circumference of the plug 56, whereas in the pass-through position at least part of the circumference of the plug 56 is spaced apart from the inner wall of the passage 16, in particular by multiple ribs 60 formed in the wall. It is to be noted, that additionally or alternatively the passage16 may also comprise grooves besides or instead of the ribs 60.

A sixth design of the driven mixer 10 is shown in Figs. 28 to 30. The driven mixer 10 according to the sixth design basically differs from the driven mixer 10 according to the fifth design in that an axis of rotation B of the drive rod 26 of the mixing member 20 is axially off-set to the axis of rotation A of the mixing section 30 of the mixing member 20 with respect to the axis of rotation A (Figs. 28 and 29).

In order to transmit a rotation from the drive rod 26 to the mixing section 30, the mixing member 20 comprises a gear train 84. The gear train 84 may be a speed reduction gear train 84 or a speed increase gear train 84. Furthermore, the speed between the components of the gear train 84 may not be altered.

The gear train 84 comprises a first gear 86 and a second gear 88. In particular, the first gear 86 is arranged at the drive rod 26 and engages with a second gear 88 of the mixing section 30. The second gear 86 is rotatably mounted around a passage 90 that ends at a tip portion 42 comprising a discharge orifice 50. The passage 90 may comprise a barrier 18 to close-off the second chamber 14.

The driven mixer 10 according to the sixth design allows for directly discharging the mixed first and second materials from the second chamber 14 without the need of removing the mixing member 20.

A driven mixer 10 according to a seventh design is shown in Figs. 31 to 33, wherein Fig. 31 shows the initial configuration of the driven mixer 10, Fig. 32 shows the activated configuration of the driven mixer 10 and Fig. 33 shows the driven mixer 10 in the discharge configuration.

The mixing member 20 of the driven mixer 10 according to the seventh design is a single hook-shaped agitating arm 62 which is connected to the second chamber 14 after a sealing film (not shown) closing off the opening of the second chamber 14 opposite to the passage 16 towards the first chamber 12 has been removed.

The hook-shaped agitating arm 62 is not only used for mixing the first and second components in the second chamber 14, but serves also as the barrier 18 that blocks the passage 16 connecting the first and second chambers 12, 14 (Fig. 32).

### List of reference signs

- 10: driven mixer
- 12, 12', 12": first chamber, end of 12, barrel
- 14, 14': second chamber, space
- 16, 16': passage, first opening
- 18, 18': barrier, membrane
- 18a: first barrier
- 18b: second barrier
- 20, 20', 20": mixing member, center of rotation of 20, annular recess
- 22: coupling section
- 24: dental handpiece
- 26: drive rod
- 28, 28': coupling end, coupling recess
- 30, 30', 30": mixing section, disc shaped section, arm
- 32: ring portion
- 34: mixing vane
- 38, 38', 38": closure, projection, projection of wall of 14
- 40: tubular barrel portion
- 42: tip portion
- 44, 44': plunger portion, sealing lip
- 46, 46', 46": snap-on connection means
- 48: channel
- 50: discharge orifice
- 52, 52', 52": piston, piercing end of 52, end opposite 52'
- 54, 54', 54", 54'": body portion, part, inner surface, second opening of 14
- 55: opening of 12
- 56: plug
- 58: outlet
- 60: ribs
- 62: agitating arm
- 64, 64': stopping means, sealing lip
- 66: bottom part
- 68: center part of 66
- 70: annular recess
- 72: wall of 14
- 74: deflecting means
- 76: elevation
- 78: outer wall
- 80: recess
- 82: gripping means
- 84: gear train
- 86: first gear
- 88: second gear
- 90: passage
- 92: pocket portion
- 94: bayonet joint
- 96: hook shaped parts of 94
- 98: openings corresponding to 96

- A: axis of rotation
- B: axis of rotation

## Claims

1. Driven mixer (10) comprising a first chamber (12) configured to store a first component and a second chamber (14) configured to store a second component, the first chamber (12) and the second chamber (14) being connected to each other by a passage (16), with the first and second chambers (12, 14) at least in an initial configuration of the driven mixer (10) being separated by a barrier (18), the barrier (18) being arranged to close off a flow path between the first and second chambers (12, 14)
the driven mixer (10) further comprising a mixing member (20), the mixing member (20) being drivable about an axis of rotation (A), partly extending into the second chamber (14) and having a coupling section (22) disposed outside the second chamber (14) and configured to be drivingly coupled to a motor,
wherein the first chamber (12) has an initial storing capacity in the initial configuration of the driven mixer (10),
wherein the driven mixer (10) is configured to be brought into an activated configuration in which the first chamber (12) has a reduced storing capacity smaller than the initial storing capacity, so that when the driven mixer (10) is brought from the initial configuration into the activated configuration at least part of a content of the first chamber (12) overcomes the barrier (18) and is displaced into the second chamber (14),
and wherein, at least in the initial configuration, the second chamber (14) is arranged between the first chamber (12) and the coupling section (22) of the mixing member (20) with respect to the axis of rotation (A).

2. Driven mixer (10) according to claim 1,
wherein the mixing member (20) comprises a drive rod (26), the coupling section (22) of the mixing member (20) being a coupling end (28) of the drive rod (26).

3. Driven mixer (10) according to claim 2,
wherein the mixing member (20) further comprises a mixing section (30) integrally formed with the drive rod (26) or connected to the drive rod (26) by means of a gear train (84) or by means of a predetermined breaking linkage, in particular with the drive rod (26) being configured to break away from the mixing member (20) in an discharging configuration of the driven mixer (10) in which the mixed first and second materials are discharged from the driven mixer (10).

4. Driven mixer (10) according to claim 3,
wherein the gear train (84) comprises a first gear (86) and a second gear (88), in particular, wherein the first gear (86) is arranged at the drive rod (26) and engages with a second gear (88) of the mixing section (30), preferably wherein the second gear (86) is rotatably mounted around a passage (90) that ends at a tip portion (42) comprising a discharge orifice (50).

5. Driven mixer (10) according to at least one of the preceding claims,
further comprising a piston (52) which, in the initial configuration, bounds the first chamber (12) or is arranged between the first chamber (12) and the second chamber (14) and which is configured to be moved into the first chamber (12) so as to reduce the storing capacity of the first chamber (12) in the activated configuration, optionally
wherein the piston (52) is movable along the axis of rotation (A) or the first chamber (12) is movable along the axis of rotation (A) relative to the piston (52).

6. Driven mixer (10) according to claim 5, wherein the piston (52) is a static piston comprising a piercing end (52'), with the piercing end (52') being configured to pierce a membrane (18') of the barrier (18) in order to permit a fluid communication between the first and second chambers (12, 14), optionally with the static piston (52) being configured to occupy at least a majority of, preferably all of, the first chamber (12) in the activated configuration.

7. Driven mixer (10) according to claim 5 or 6,
further comprising a body portion (54) in which the second chamber (14) is formed,
wherein the piston (52) is formed as an integral part of the body portion (54), or is movable within the body portion (54).

8. Driven mixer (10) according to at least one of the preceding claims, in particular according to one of the preceding claims 5 to 7,
further comprising a plug (56) which in the activated configuration bounds the second chamber (14) and is configured to be moved into the second chamber (14) so as to displace a content of the second chamber (14) out of the driven mixer (10), optionally wherein the plug (56) is movable along the axis of rotation (A),
in particular wherein the piston (52) is configured to be moved into the first chamber (12) in a first direction and the plug (56) is configured to be moved into the second chamber (14) in a second direction,
wherein the first direction and the second direction are the same direction or
wherein the first direction and the second direction are opposite directions.

9. Driven mixer (10) according to at least one of the preceding claims, wherein the mixing member (20) comprises a mixing section (30) comprising at least one mixing vane (34) for mixing the first and second components, wherein the mixing vane (34) is in particular concentrically arranged with the axis of rotation (A) and more specifically extends in parallel to or at least substantially in parallel to the axis of rotation (A), and/or
wherein the mixing section (30) forms a part of the passage (16); and/or
wherein the mixing section (30) comprises a disc shaped section (30') that couples the mixing vane (34) to the coupling section (22), in particular to the drive rod (26).

10. Driven mixer (10) according to at least one of the preceding claims, wherein the first and second chambers (12, 14) are coupled to one another by means of a snap-on connection (46), an interference fit type of connection, a press-fit type of connection, a plug and rotate type of connection, a bayonet type of connection, a threaded connection or combinations of the foregoing.

11. Driven mixer (10) according to at least one of the preceding claims,
wherein the second chamber (14) has a first end at which it is connected to the first chamber (12) by a passage (16) and a second end which is opposite to the first end and at which the second chamber (14) is bound by the mixing member (20) and/or by a closure (38) supporting the mixing member (20).

12. Driven mixer (10) according to at least one of the preceding claims,
wherein the passage (16) is sealed by the barrier (18).

13. Driven mixer (10) according to at least one of the preceding claims,
wherein the barrier (18, 18a, 18b) is a membrane (18') or film, and at least part of the first component of the first chamber (12) is forced through the membrane or film, when the driven mixer (10) is brought from the initial configuration into the activated configuration, and/or
at least part of the first and second components mixed in the second chamber (14) are forced through the membrane or film, when the driven mixer (10) is brought from the activated configuration into the discharge configuration.

14. Driven mixer (10) according to at least one of the preceding claims,
wherein the barrier (18, 18a, 18b) is an injection molded membrane (18') or film, the injection molded membrane (18') or film being configured to rupture if a pressure of the material stored in the first chamber (12) exceeds a pre-defined threshold on displacing the driven mixer (10) from the initial configuration into the activated configuration.

15. Driven mixer (10) according to at least one of the claims 1 to 13,
wherein the barrier (18, 18a, 18b) is a film welded to the first chamber (12) and/or to the second chamber (14).

16. Driven mixer (10) according to at least one of the preceding claims,
wherein the first chamber (12) is filled with a liquid, with the liquid preferably being selected from the group of members consisting of a dental liquid, a medical liquid, an ophthalmic liquid, a veterinary liquid and combinations of the foregoing; and/or
wherein the second chamber (14) is filled with a powder, with the powder preferably being selected from the group of members consisting of a dental powder, a medical powder, an ophthalmic powder, a veterinary powder and combinations of the foregoing.

17. Driven mixer (10), in particular according to at least one of the preceding claims, configured as a syringe comprising a tubular barrel portion (40), a tip portion (42) being connected to the barrel portion (40) from one side and a plunger portion (44) inserted into the barrel portion (40) from the other side,
wherein the barrel portion (40) comprises a first chamber (12) and a second chamber (14) formed therein, with the first and second chambers (12, 14) being connected to each other by a passage (16), the passage (16) being sealed by a first barrier (18a),
wherein the tip portion (42) comprises a channel (48) one end of which forms a discharge orifice (50) of the driven mixer (10) and the other end of which is closed by a second barrier (18b) which together with the first barrier (18a) bounds the first chamber (12) in the initial configuration,
the tip portion (42) additionally being configured to be moved into the barrel portion (40) so as to force at least part of a content of the first chamber (12) through or past the first barrier (18a) into the second chamber (14),
wherein the plunger portion (44) bounds the second chamber (14) in the initial configuration and supports a drivable mixing member (20) extending at least partly into the second chamber (14) and being configured to be connected to a motor,
the plunger portion (44) further being configured to be moved further into the barrel portion (40) so as to force at least part of a content of the second chamber (14) through or past the first and second barriers (18a, 18b) out of the discharge orifice (50).

18. Driven mixer (10) according to at least one of the preceding claims,
wherein at least one mixing vane (34) is made of a flexible material and/or is configured to break away from the mixing member (20) on bringing the driven mixer (10) into a discharge configuration, in which the mixing member (20) extends through the second chamber (14) into the first chamber (12) to discharge the mixed first and second components from the second chamber (14) out of the driven mixer (10).

19. Driven mixer (10) according to at least one of the preceding claims, wherein the second chamber (14) comprises a bottom part (66) in which an annular recess (70) is formed, in particular wherein a part of the mixing member (20) has a shape adapted to the shape of the annular recess (70).

20. A method of activating a driven mixer (10), in particular in accordance with at least one of the preceding claims, by moving the driven mixer (10) from an initial configuration to an activated configuration, the driven mixer (10) comprising a first chamber (12) configured to store a first component, and a second chamber (14) configured to store a second component, the first chamber (12) and the second chamber (14) being connected to each other by a passage (16) which is sealed by a barrier (18),
the driven mixer (10) further comprising a mixing member (20), the mixing member (20) being drivable about an axis of rotation (A), partly extending into the second chamber (14) and having a coupling section (22) disposed outside the second chamber (14) and configured to be drivingly coupled to a motor,
wherein the driven mixer (10) has an initial configuration in which the first chamber (12) has an initial storing capacity,
wherein the driven mixer (10) is configured to be brought into an activated configuration in which the first chamber (12) has a reduced storing capacity smaller than the initial storing capacity, so that when the driven mixer (10) is brought from the initial configuration into the activated configuration at least part of a content of the first chamber (12) overcomes the barrier (18) and is displaced into the second chamber (14),
and wherein, at least in the initial configuration, the second chamber (14) is arranged between the first chamber (12) and the coupling section (22) of the mixing member (20) with respect to the axis of rotation (A).
